# EUROPÄISCHE PATENTSCHRIFT

(11) **EP 1 892 327 B1**
(45) Veröffentlichungstag und Bekanntmachung des Hinweises auf die Patenterteilung: **24.12.2008**
(21) Anmeldenummer: 07112919.1
(22) Anmeldetag: 23.07.2007
(51) Int. Cl.: D06M 15/643, D06M 15/647, D21H 21/22, C11D 3/37, C08L 83/04, C08G 77/46

(54) **Verwendung von polyethermodifizierten Siloxanblockcopolymeren als hydrophile silikonhaltige Weichmacher für Gewebe, Non-wovens und/oder Fasern aus natürlichen und/oder synthetischen Rohstoffen**
Use of polyether modified siloxan block copolymers as hydrophilic softeners containing silicones for textiles, non-wovens and/or fibres made of natural and/or synthetic raw materials
Utilisation de copolymères de blocs de siloxane à polyéther modifié en tant que plastifiant comportant du silicone hydrophile pour tissus, non tissés et/ou fibres en matières premières naturelles et/ou synthétiques

(30) Priorität: 25.08.2006 DE 102006040010
(43) Veröffentlichungstag der Anmeldung: 27.02.2008
(73) Patentinhaber: Evonik Goldschmidt GmbH, 45127 Essen (DE)
(72) Erfinder: Ferenz, Michael Dr., 45147, Essen (DE); Herrwerth, Sascha Dr., 45134, Essen (DE); Maurer, Tobias Dr., 42551, Velbert (DE)

(56) Entgegenhaltungen:
- EP-A- 0 867 462
- EP-A- 1 679 335

## Beschreibung

Die Erfindung betrifft die Verwendung von polyethermodifizierten Siloxanblockcopolymeren als hydrophile silikonhaltige Weichmacher für Gewebe, Non-wovens und/oder Fasern aus natürlichen und/oder synthetischen Rohstoffen.

Im gesamten Herstellungsprozess von Textilien bzw. textilen Flächengebilden, angefangen bei der Herstellung verschiedener Fasern über Gewebe und Non-Wovens bis schließlich zum eigentlichen Textil, werden verschiedenste Prozesshilfsmittel benötigt. Eine wichtige Rolle spielen hierbei die Substanzenklassen, die sowohl in verschiedenen Prozessschritten durch Verminderung der Reibung die Verarbeitung erleichtern als auch bei der Endausrüstung dem Gewebe oder fertigen Textil eine besondere Eigenschaft verleihen können. Eine besondere Rolle, besonders in der Endausrüstung von Textilien, die mit der menschlichen Haut in Berührung kommen, spielen hierbei die sogenannten Weichmacher oder Softener. Die verwendeten Weichmacher erzeugen so zum Beispiel einen angenehmen, flauschigen, voluminösen oder glatten Griff, welcher den Tragekomfort eines Textils deutlich erhöht.

Allen hier verwendeten Produktklassen ist gemein, dass sie überwiegend aus wässrigen, sauren Flotten im sogenannten finishing Schritt auf das Gewebe appliziert werden. Die dabei verwendeten Produkte kommen überwiegend aus dem Bereich der organischen Tenside oder der organisch modifizierten Siloxane. Bei den organischen Tensiden finden insbesondere die kationischen Produkte wie Imidazolinquats oder Esterquats einen breiten Einsatz.

Bei den organomodifizierten Siloxanen hingegen werden als Weichmacher häufig Siloxane eingesetzt, die Aminofunktionen tragen, da derartige Verbindungen gut auf die Faser aufziehen und einen charakteristischen, sehr glatten Weichgriff erzeugen. Derartige Verbindungen werden zum Beispiel in der Patentschrift EP 1 301 570 beschrieben.

Im Bereich der hydrophilen primären Weichmacher kommen Siloxane zum Einsatz, die quaternäre Ammoniumfunktionen tragen. α,ω-diquartäre Polysiloxane sind aus der US 4,891,166 bekannt. Die Synthese erfolgt durch Reaktion von α,ω-Diepoxiden mit tertiären Aminen in Gegenwart von Säuren.

Die US 4,833,225 offenbart lineare polyquaternäre Polysiloxane, die durch die Reaktion mit α,ω-Diepoxiden mit ditertiären Aminen in Gegenwart von Säuren synthetisiert werden. Die Substanzen gemäß US 4,891,166 und US 4,833,225 besitzen eine ausgeprägte Tendenz, auf Textilien aufzuziehen. Sie besitzen hervorragende Eigenschaften als textile Weichmacher, was insbesondere auf die Anwesenheit eines linearen, unmodifizierten Siloxanfragmentes zurückzuführen ist.

Wie bereits erwähnt, verleihen auf Aminosiloxanen basierende Weichmacher dem ausgerüsteten Gewebe einen weichen, sehr glatten Griff, haben jedoch den Nachteil, dass insbesondere hydrophiles Gewebe, wie zum Beispiel Baumwolle, stark hydrophobiert und somit die Fähigkeit zur Wasseraufnahme deutlich reduziert wird. Des Weiteren werden große Mengen Emulgator benötigt, um Aminosiloxane in eine stabile wässrige Mikroemulsion für die Applikation zu überführen.

Ein Weg, die Emulgiereigenschaft und die Hydrophilie von Aminosiloxanweichmachern zu verbessern, ist der direkte Einbau von Polyethereinheiten in das Aminosiloxangerüst, wie es zum Beispiel in den Patentschriften US 5,591,880 und US 5,650,529 beschrieben wird.

Die EP 1 679 335 beschreibt Siloxanblockcopolymere und deren Verwendung zur Ausrüstung von Textilien.

Alternativ dazu gilt als Stand der Technik die Verwendung polyethermodifizierter Siloxane als Additive in Weichmacherformulierungen mit Aminosiloxanen.

Die Verwendung dieser hydrophilen Polyethermodifikationen führt in den meisten Fällen zu einer Verbesserung des Rücknetz- und Benetzungsverhaltens der behandelten Gewebe sowie der Erhöhung der Emulsionsstabilität.

Polyethermodifizierte Siloxane werden demnach als Einzelkomponenten oder Formulierungskomponenten in silikonhaltigen Weichmacherformulierungen für die Ausrüstung von Gewebe, Non-wovens, Fasern und Garnen aus natürlichen und/oder synthetischen Rohstoffen verwendet.

Allgemein bekannt ist der Effekt, dass in dem Maße, in dem die Hydrophilie eines so ausgerüsteten Gewebes, Faser und/oder Garnes aus natürlichen oder synthetischen Rohstoffen verbessert werden kann, der weich machende Effekt einer Formulierung und/oder der Permanenzeffekt herabgesetzt werden oder nicht zu beobachten sind. Die Verwendung nur weniger hydrophiler Gruppen im Silikongerüst wiederum macht den Einsatz von zusätzlichen Emulgatoren, wie Fettalkoholethoxylaten, notwendig, um eine stabile, wässrige Formulierung zu erhalten. Dies wiederum erhöht die Komplexität und Anfälligkeit der Formulierung bezüglich der Stabilität der Emulsion, zum Beispiel unter dem Einfluss von Scherkräften und Temperatur.

Wie bereits beschrieben, ergibt das Vorhandensein quaternärer Ammoniumverbindungen im Siloxangerüst einen sehr guten, weich machenden Effekt. Nachteil dieser im Weichgriff verbesserten Formulierung auf Basis solcher quaternärer Ammoniumverbindungen ist die Anfälligkeit der nun kationischen Formulierung gegenüber anionischen Substanzen, wie zum Beispiel Tensidrückständen, optischen Aufhellern oder anionischen Farbstoffen. Diese bilden zumeist unlösliche Komplexe mit dem kationischen Weichmacher und führen häufig zu Ablagerungen, die wiederum als Flecken zu erkennen sind oder zu ungleichmäßig gefärbter Ware führen.

Aufgabe dieser Erfindung war es, organomodifizierte, nichtionische Polysiloxanverbindungen zur Verfügung zu stellen, die als hydrophile, selbstemulgierende Weichmacher eingesetzt werden können und zudem eine Verbesserung der Permanenz auf Gewebe, Non-wovens und/oder Fasern aus natürlichen und/oder synthetischen Rohstoffen bewirken. Die erfindungsgemäßen Verbindungen verleihen Geweben, Non-wovens, Fasern und Garnen aus natürlichen und/oder synthetischen Rohstoffen nach entsprechender Applikation einen silikontypischen, weichen, glatten Griff und eine ausgeprägte Hydrophilie.

Es ist weiterhin Aufgabe dieser Erfindung, derartige hydrophile Silikonweichmacher, die eine sehr gute Kompatibilität zu anionischen Komponenten (z.B. optischen Aufhellern, anionischen Tensiden, wie sie in Waschmittelformulierungen eingesetzt werden, z.B. Alkansulfonaten und/oder anionisch basierten Farbstoffen) aufweisen, bereitzustellen.

Überaschenderweise konnte festgestellt werden, dass die erfindungsgemäßen Produkte mehrere Eigenschaften auf sich vereinen können, ohne dabei das wesentliche Ziel der hydrophilen Weichmachung stark zu beeinträchtigen. Hierzu zählt die unbegrenzte Löslichkeit der erfindungsgemäßen Produkte in Wasser. Des Weiteren führen die erfindungsgemäßen Produkte im Vergleich zu herkömmlichen wasserlöslichen bzw. emulgierbaren polyethermodifizierter Siloxanen trotz ihrer ausgeprägten Hydrophilie und ihrer Wasserlöslichkeit zu einer deutlichen Verbesserung des Griffes der behandelten Gewebe, hier insbesondere von durch Weben oder Stricken hergestellten glatten Gewebearten. Zusätzlich besitzen die erfindungsgemäßen Produkte stabilisierende, solubilisierende und/oder coemulgierende Eigenschaften in Formulierungen mit typischen Silikonweichmachern.

Zusätzlich zu dem permanenten, weich machenden Effekt klassischer Aminosiloxane konnte in derartigen Abmischungen überraschenderweise durch den Einsatz der erfindungsgemäßen Produkte eine permanente Hydrophilie auf den Substraten erzielt werden, ohne den weich machenden Effekt des Aminosiloxanes zu beeinflussen.

Das Wesen dieser Erfindung liegt in der Anwendung von organomodifizierten Siloxanen als Weichmacher und Hydrophilierungsmittel für Fasern Gewebe und non-Worens aus natürlichen und synthetischen Fasern und aus Fasern bestehenden Produkten, die eine besondere Struktur aufweisen. Diese besitzen zum einen ein nicht modifiziertes, lineares Siloxanfragment sowie mehrfach modifizierte Kettenenden.

Diese Organopolysiloxane werden erhalten durch die Umsetzung von einem oder mehreren Siloxanen der allgemeinen Formel I 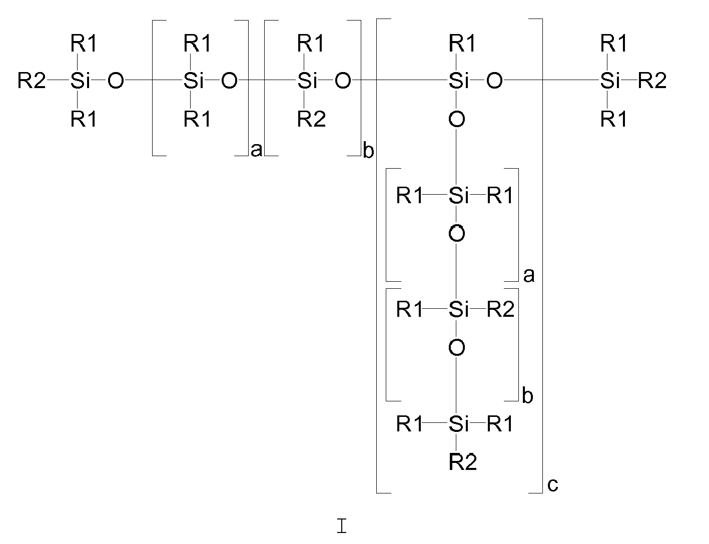 worin die Substituenten und Indices die Bedeutung haben:
- R1 =: gleiche oder verschiedene aliphatische oder aromatische Kohlenwasserstoffreste mit 1 bis 20 C-Atomen,
- R2 =: R1 oder H mit der Maßgabe, dass mindestens drei Reste R2 gleich H sind,
- a =: 5 bis 200, bevorzugt 10 bis 100, insbesondere 10 bis 40,
- b =: 1 bis 50, bevorzugt 3 bis 20, insbesondere 4 bis 15,
- c =: 0 bis 5, bevorzugt 0,
und einem oder mehreren Vinylsiloxanen der allgemeinen Formel II 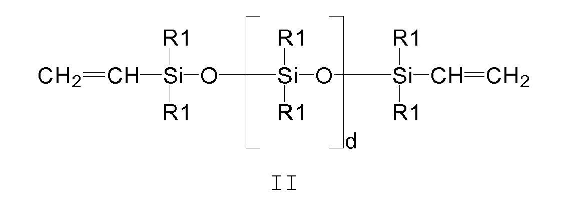 worin
- d =: 60 bis 500, bevorzugt 120 bis 400, bedeutet,
in Gegenwart von Platin-, Rhodium- oder Rutheniumkatalysatoren unter der Maßgabe, dass das Organopolysiloxan der allgemeinen Formel I in mindestens 6-fachem molaren Überschuss, bezogen auf das Vinylsiloxan der allgemeinen Formel II, vorliegt und anschließender übergangsmetallkatalysierter Addition der SiH-Gruppen an Doppelbindungen enthaltende Polyether der allgemeinen Formel III 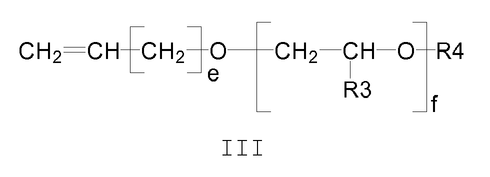 worin die Substituenten und Indices die Bedeutung haben:
- R3 =: gleiche oder verschiedene, gegebenenfalls verzweigte, gegebenenfalls Heteroatomsubstituenten tragende, gegebenenfalls Etherfunktionen enthaltende Alkyl-, Aryl- oder Alkarylreste oder Wasserstoff, vorzugsweise Wasserstoff oder Methylreste,
- R4 =: gleiche oder verschiedene, gegebenenfalls verzweigte, gegebenenfalls Heteroatomsubstituenten tragende, gegebenenfalls ungesättigte Alkyl-, Aryl- oder Alkarylreste oder Wasserstoff oder Carboxylreste, vorzugsweise Methylreste,
- e =: 0 bis 11, bevorzugt 1 bis 4, insbesondere 1,
- f =: 3 bis 80, bevorzugt 5 bis 50,
mit der Maßgabe, dass sowohl eine statistische als auch eine blockweise Anordnung der Oxyalkylen-Einheiten vorliegen kann,
und gegebenenfalls mit zusätzlichen Olefinen, die gegebenenfalls funktionelle Gruppen tragen.

Geeignete zusätzliche Olefine sind Ethen, 1-Dodecen, 1-Hexadecen, Allylalkohol, 1-Hexenol, Styrol, Eugenol, Undecylensäuremethylester, Vinylalkoxysilane, Allylglycidether, die dazu verwendet werden können, zusätzliche Substantivität zu generieren oder das Hydrophilie/Hydrophobie-Verhältnis einzustellen.

Durch das Hydrophilie/Hydrophobie-Verhältnis können durch einen Fachmann mit einfachen orientierenden Versuchen die anwendungstechnischen Eigenschaften der erfindungsgemäßen Produkte gezielt eingestellt werden.

Des Weiteren lassen sich eventuell vorhandene Epoxyfunktionen mit tertiären Aminen zu den entsprechenden quaternären Verbindungen umsetzen.

Durch die Maßgabe, dass das SiH-Gruppen tragende Organopolysiloxan der allgemeinen Formel I in mindestens 6-fachem molaren Überschuss, bezogen auf das Vinylsiloxan der allgemeinen Formel II, vorliegt, wird verhindert, dass es zur Ausbildung eines Netzwerkes und zur Entstehung hochviskoser Produkte kommt.

Dies bedingt, dass neben dem erfindungsgemäßen Organosiloxan ein gewisser Anteil eines kammartig modifizierten Siloxans im Produkt vorliegt.

Die erfindungsgemäß verwendbaren Organosiloxane besitzen in der Regel Viskositäten bis 40 000 mPa s, vorzugsweise unter 20 000 mPa s, insbesondere unter 8 000 mPa s.

Aufgrund der gewählten Reaktionsbedingungen bildet sich aus dem Vinylsiloxan und dem Si-funktionellen Siloxan in der ersten Stufe in der Regel ein Siloxan der folgenden idealisierten Struktur (c = 0, R1 = Me, R2 = R = Me oder H):

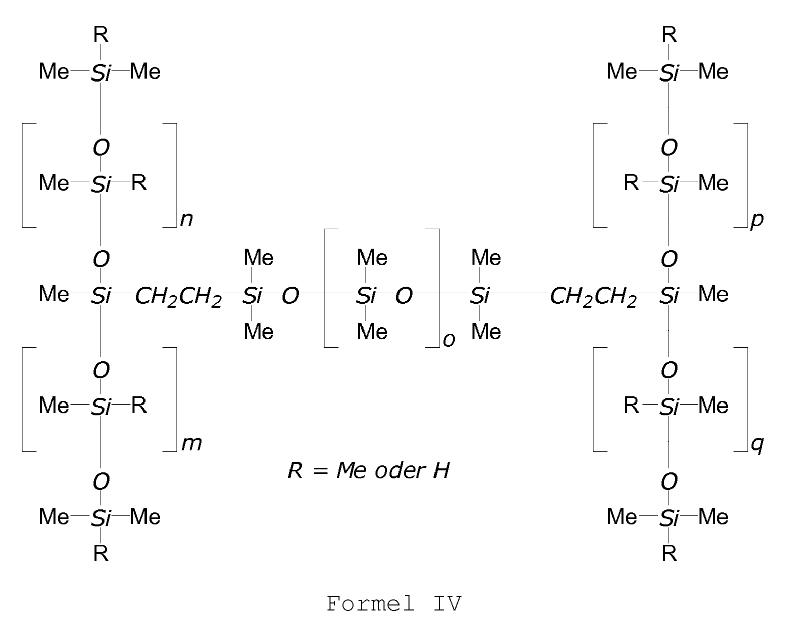

Dieses Siloxangerüst bleibt bei der anschließenden Herstellung der erfindungsgemäß verwendbaren polyethermodifizierten Siloxane in der 2. Stufe erhalten.

Es wurde gefunden, dass die Darstellung der erfindungsgemäß verwendbaren Siloxane lösemittelfrei erfolgen kann. Der Einsatz eines Lösemittels kann jedoch vorteilhaft sein. So kann es zum Beispiel bei der Darstellung der erfindungsgemäßen Siloxane zu einer Schaumbildung kommen, die sich durch den Einsatz von Lösemitteln unterdrücken lässt. Geeignete Lösemittel sind zum Beispiel Toluol und Cyclohexan.

Des Weiteren kann es sinnvoll sein, zur Schaumunterdrückung während der Herstellung der erfindungsgemäß verwendbaren Produkte Partikel zuzusetzen.

Als wirksame Katalysatoren für die Hydrosilylierung können Pt-, Rh- oder Ru-haltige Verbindungen eingesetzt werden, die dem Fachmann als hydrosilylierungsaktive Katalysatoren bekannt sind, zum Beispiel H₂PtCl₆, Pt[(CH₂CH-Si)₂O]ₙ oder Rh (CO) (C₅H₇O₂).

### Beispiele:

### Allgemeine Herstellvorschrift der erfindungsgemäß verwendeten Organosiloxane

a) In einem Dreihalskolben mit Rührer, Intensivkühler und Thermometer wird das Siloxan der allgemeinen Formel I mit einem Siloxan der allgemeinen Formel II gemischt und mit 10 ppm eines Pt-Katalysators versetzt. Die Reaktionsmischung wird anschließend zwei Stunden bei 90 °C gerührt.
b) In einem Dreihalskolben mit Rührer, Intensivkühler und Thermometer wird das nach a) hergestellte Siloxan mit 10 ppm eines Pt-Katalysators vorgelegt und auf 100 °C erhitzt. Anschließend werden Polyether der allgemeinen Formel III und gegebenenfalls weitere Olefine innerhalb von einer Stunde zugetropft. Dabei wird so viel Olefin zugesetzt, dass pro SiH Funktion 1,3 mol an Doppelbindungen zur Hydrosilylierung zur Verfügung stehen. Die Reaktionsmischung wird anschließend für ca. fünf Stunden bei 100 °C gerührt.

In Tabelle 1 sind Beispiele für die erfindungsgemäß verwendbaren Organosiloxane und die Mengen der jeweiligen Edukte aufgeführt.

**Tabelle 1**

| | Siloxan nach Formel I | Siloxan nach Formel II | Polyether nach Formel III | Weitere Olefine |
|---|---|---|---|---|
| Beispiel 1 | 11 mol Me₃Si-[SiMe₂O]₂₈-[SiMeHO]₁₀-SiMe₃ | 1 mol CH₂=CH-SiMe₂-[SiMe₂O]₂₀₀-SiMe₂-CH=CH₂ | CH₂=CH-CH₂-O-[CH₂CH₂O]₁₀-[CH₂CH(CH₃)O]_{1 6}-Me | |
| Beispiel 2 | 11 mol Me₃Si-[SiMe₂O]₂₈-[SiMeHO]₁₀-SiMe₃ | 1 mol CH₂=CH-SiMe₂- [SiMe₂O]₂₀₀-SiMe₂-CH=CH₂ | CH₂=CH-CH₂-O-[CH₂CH₂O]₁₂-H | |
| Beispiel 3 | 12 mol Me₃Si-[SiMe₂O]₂₈-[SiMeHO]₁₀-SiMe₃ | 1 mol CH₂=CH-SiMe₂-[SiMe₂O]₃₅₀-SiMe₂-CH=CH₂ | CH₂=CH-CH₂-O-[CH₂CH₂O]₂₅-[CH₂CH(CH₃)O]₅ -Me | |
| Beispiel 4 | 11 mol Me₃Si-[SiMe₂O]₂₈-[SiMeHO]₁₀-SiMe₃ | 1 mol CH₂=CH-SiMe₂-[SiMe₂O]₂₀₀-SiMe₂-CH=CH₂ | 90 % CH₂=CH-CH₂-O-[CH₂CH₂O]₁₂-H | 10 % 1-Hexadecen |
| Beispiel 5 | 11 mol Me₃Si-[SiMe₂O]₂₈-[SiMeHO]₁₀-SiMe₃ | 1 mol CH₂=CH-SiMe₂-[SiMe₂O]₇₀-SiMe₂-CH=CH₂ | CH₂=CH-CH₄-O-[CH₂CH₂O]₁₀-Me | |
| Beispiel 6 | 11 mol Me₃Si-[SiMe₂O]₂₈-[SiMeHO]₁₀-SiMe₃ | 1 mol CH₂=CH-SiMe₂-[SiMe₂O]₄₅₀-SiMe₂-CH=CH₂ | CH₂=CH-CH₂-O-[CH₂CH₂O]₁₀-[CH₂CH(Ph)O]₃ -Me | |
| Beispiel 7 | 6 mol Me₃Si-[SiMe₂O]₁₀₀-[SiMeHO]₃-SiMe₃ | 1 mol CH₂=CH-SiMe₂-[SiMe₂O]₂₀₀-SiMe₂-CH=CH₂ | CH₂=CH-CH₂-O-[CH₂CH₂O]₁₀-[CH₂CH(CH₃)O]_{1 6}-Me | |
| Beispiel 8 | 9 mol HMe₂Si-[SiMe₂O]₁₃-[SiMeHO]₆-SiMe₂H | 1 mol CH₂=CH-SiMe₂-[SiMe₂O]₂₀₀-SiMe₂-CH=CH₂ | 90 % CH₂=CH-CH₂-O-[CH₂CH₂O]₁₀- [CH₂CH(CH₃)O]_{1 6}-Me | 10 % Undecylensäureme thylester |
| Beispiel 9 | 11 mol Me₃Si-[SiMe₂O]₂₈-[SiMeHO]₂₅-SiMe₃ | 1 mol CH₂=CH-SiMe₂-[SiMe₂O]₂₀₀-SiMe₂-CH=CH₂ | 80% CH₂=CH-CH₂-O-[CH₂CH₂O]₁₀-[CH₂CH(CH₃)O]_{1 6}-Me | 20 % CH₂=CH-CH₂-O-[CH₂CH₂O]₁₂-H |

### Beispiel 10 (nicht erfindungsgemäß)

Als nicht erfindungsgemäßes Vergleichsbeispiel wurde ein wasserlösliches, handelsübliches Ethylenoxid/Propylenoxid (EO:PO ca. 70:30) Polyethersiloxan mit einem mittleren Molekulargewicht von ca. 13000 verwendet.

### Anwendungstechnische Austestung:

### I) Lösungsversuche/Herstellung niedrig konzentrierter Formulierungen in Wasser - Verbesserung der Handhabung:

In ein mit Propellerrührer bestücktes 150-ml-Becherglas wurden 75 g entmineralisiertes Wasser vorgelegt und anschließend bei Raumtemperatur mit 25 g eines handelsüblichen Polyethersiloxans (Beispiel 10) versetzt. Nach 1-stündigem Rühren wurde eine klare, niedrig viskose, stabile Formulierung erhalten (Formulierung 10a).

Analog wurden Formulierungen der erfindungsgemäßen Produkte 1, 2, 3 und 4 angesetzt (Formulierungen 1a, 2a, 3a und 4a). Hierbei konnten binnen weniger Minuten klare bis opaleszente, niedrig viskose, stabile Formulierungen erhalten werden.

Es konnte gezeigt werden, dass die erfindungsgemäßen Verbindungen sich deutlich leichter formulieren lassen.

### II) Applikation der wässrigen Formulierungen mittels Foulardverfahren:

Zur Austestung der oben beschriebenen wässrigen Formulierungen wurde Baumwollmaschenware mit einer Flotte, die 20 g/l der jeweiligen wässrigen Formulierungen enthält, foulardiert, auf ca. 100 % Flottenaufnahme imprägniert und bei 130 °C drei Minuten lang getrocknet. Anschließend wurden das Wasseraufnahmevermögen mittels der Steighöhenmethode sowie der Weichgriff bestimmt.

### Griffbeurteilung

Zur Beurteilung des Warengriffes wurde ein erfahrenes Team zusammengestellt, das die anonymisierten Griffmuster, der mit den Emulsionen ausgerüsteten Maschen- und Frottierwaren, mit Hilfe eines Handpaneltests bewertete. Bei den Griffmustern aus Maschenware wurde zusätzlich eine nicht offensichtlich gekennzeichnete, unbehandelte Probe hinzugelegt.

### Prüfung der Hydrophilie

Zur Überprüfung der Hydrophilie wurde die an DIN 53924 angelehnte interne Prüfmethode zur Messung der Steighöhe von Wasser verwendet. Dabei wurde das ausgerüstete Baumwolltestgewebe in jeweils fünf 25 cm lange und 1,5 cm breite Streifen geschnitten, mit einem wasserlöslichen Stift markiert und an einer Halterung senkrecht straff, aber ohne Spannung, befestigt. Die Halterung wurde anschließend für 5 Minuten so in ein Wasserbecken gestellt, dass 2 cm der Streifen ins Wasser eintauchten. Nachdem die Halterung 10 Minuten außerhalb des Wasserbeckens gestanden hat, wurde die Steighöhe in cm abgelesen, gegen den Blindwert (Steighöhe der unbehandelten Baumwollstreifen x cm = 100 %) bestimmt und in % vom Blindwert angegeben.

Die Ergebnisse sind in der folgenden Tabelle zusammengefasst. Es zeigt sich, dass mit den Formulierungen 2a und 3a (erfindungsgemäß) ein besserer Griff als mit Formulierung 10a (nicht erfindungsgemäß) erreicht werden konnte, ohne dass das Rücknetzverhalten negativ beeinflusst wurde. Darüber hinaus wies die so ausgerüstete Baumwollmaschenware eine hohe Sprungelastizität und verbesserte Entknitterungseigenschaften auf.

**Tabelle 2**

| Produkt | Griff auf Baumwoll-Wirkware | Griff auf Baumwoll-Webware | Rücknetzvermögen % unbehandeltes Gewebe (Baumwolle) |
|---|---|---|---|
| Formulierung 10a (aus Beispiel 10, nicht erfindungsgemäß) | 2 | 2 | 95 |
| Formulierung 1a (aus Beispiel 1, erfindungsgemäß) | 4 | 3 | 80 |
| Formulierung 2a (aus Beispiel 2, erfindungsgemäß) | 3 | 3 | 96 |
| Formulierung 3a (aus Beispiel 3, erfindungsgemäß) | 4 | 4 | 94 |
| Formulierung 4a (aus Beispiel 4, erfindungsgemäß) | 5 | 4 | 78 |

| | | | |
|---|---|---|---|
| Griffbeurteilung: 5 sehr gut, 0 schlecht | | | |

### Formulierungen mit kationischen Weichmachersystemen

### Formulierung 11b (nicht erfindungsgemäß)

20 Teile eines handelsüblichen Aminosiloxans wurden in einem Behälter mit Dissolverscheibe vorgelegt. Anschließend wurden 9 Teile eines Fettalkoholethoxylates mit einem Ethoxylierungsgrad von 6 und 5 Teilen eines Fettalkoholethoxylates mit einem Ethoxylierungsgrad von 10 (z.B. Rewopal LA 6 und Rewopal LA 10-80 der Firma Goldschmidt Rewo GmbH) unter Rühren hinzugegeben. Zuletzt wurde portionsweise mit 5,10 und schließlich 50,6 Teilen Wasser aufgefüllt und am Ende mit ca. 0,4 Teilen Essigsäure (99 %ig) der pH auf 4-5 eingestellt. Man erhält eine klare bis opake niedrigviskose Formulierung.

### Formulierung 3b (erfindungsgemäß, aus Beispiel 3)

20 Teile einer Mischung aus einem wie in Formulierung 6b verwendeten handelsüblichen Aminosiloxan und dem erfindungsgemäßen Polyethersiloxan aus Beispiel 3, abgemischt in einem Verhältnis 4:1, wurden in einem Behälter mit Dissolverscheibe vorgelegt. Anschließend wurden 8 Teile eines Fettalkoholethoxylates mit einem Ethoxylierungsgrad von 6 und 3 Teilen eines Fettalkoholethoxylates mit einem Ethoxylierungsgrad von 10 (z.B. Rewopal LA 6 und Rewopal LA 10-80 der Firma Goldschmidt Rewo GmbH) unter Rühren hinzugegeben. Zuletzt wurde portionsweise mit 5,10 und 53,6 Teilen Wasser aufgefüllt und am Ende mit 0,3 Teilen Essigsäure (99 %ig) der pH-Wert auf 4-5 eingestellt. Man erhält eine klare bis opake niedrigviskose Formulierung.

### Applikation der Formulierungen 3b und 11b durch Foulardverfahren

Baumwollmaschenware wurde mit einer Flotte, die jeweils 50 g/l der entsprechenden Formulierung enthält, foulardiert, auf ca. 90 % Flottenaufnahme imprägniert und bei 105 °C zehn Minuten lang getrocknet.

Anschließend wurden der Griff sowie das Rücknetzverhalten bestimmt, die Proben gewaschen und erneut bewertet.

### Waschvorgang

Die Waschvorgänge wurden in einer handelsüblichen Waschmaschine, Miele Novotronic W 918, mit Buntwäsche, ohne Vorwaschen, bei 40 °C mit wfk Standardwaschmittel IECA-Base und 3 kg BW-Ballastgewebe gewaschen. Zuletzt wurde das so behandelte Gewebe mindestens 12 Stunden bei Raumtemperatur getrocknet.

Die Ergebnisse sind in der folgenden Tabelle zusammengefasst.

**Tabelle 3**

| | Formulierung 3b (erfindungsgemäß, aus Beispiel 3) | Formulierung 11b (nicht erfindungsgemäß) |
|---|---|---|
| Rücknetzv. (%) ungewaschen | 74 | 70 |
| Rücknetzv. (%) gewaschen | 73 | 62 |
| Griff ungewaschen | 4 | 4 |
| Griff gewaschen | 4 | 4 |

Bei gleichem, sehr gutem weichen Griffverhalten zeigt das Rücknetzvermögen insbesondere nach dem Waschen für das mit der Formulierung 3b (erfindungsgemäß) ausgerüstete Gewebe gegenüber dem mit Standard Aminosiloxan ausgerüsteten Gewebe (Formulierung 5b, nicht erfindungsgemäß) eine deutlich verbesserte Permanenz bezüglich der Hydrophilie.

### Nachweis der Kompatibilität mit optischen Aufhellern

Die Formulierungen 3b und 11b werden mit Wasser auf 2 % verdünnt. Anschließend werden 20 ml dieser Verdünnung mit 20 ml einer 2 % Verdünnung eines handelsüblichen, optischen Aufhellers (z.B. Ciba^{R} UVITEX^{R} RSB 150 % von Ciba) gemischt. Während die Mischung aus Formulierung 3b und dem optischen Aufheller keinen Unterschied zu den jeweiligen Verdünnungen aufweist, stellt sich bei der Mischung aus Formulierung 11b und dem optischen Aufheller umgehend eine Trübung ein, die nach einer Stunde entsteht, zu Abscheidungen am Gefäßboden führt, während die Mischung aus Formulierung 3b und dem optischen Aufheller unverändert bleibt.

## Patentansprüche

1. Verwendung von Organopolysiloxanen, erhalten durch die Umsetzung von einem oder mehreren Siloxanen der allgemeinen Formel I 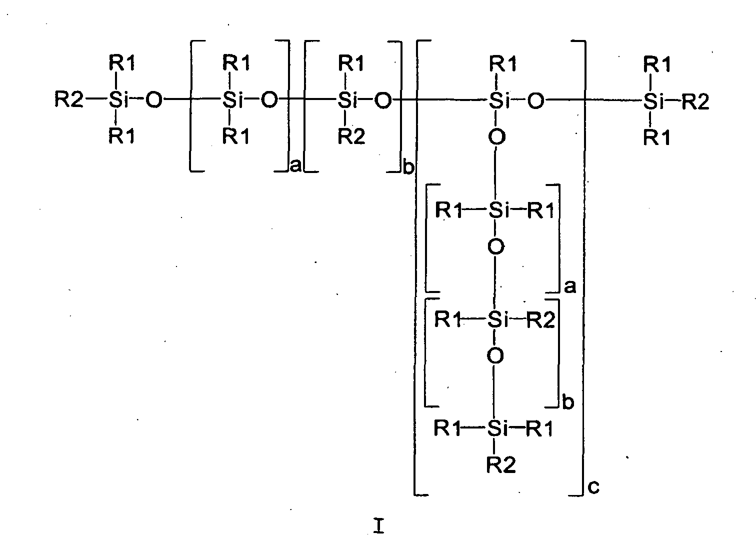 worin die Substituenten und Indices die Bedeutung haben:
R1 = gleiche oder verschiedene aliphatische oder aromatische Kohlenwasserstoffreste mit 1 bis 20 C-Atomen,
R2 = R1 oder H mit der Maßgabe, dass mindestens drei Reste R2 gleich H sind,
a = 5 bis 500,
b = 1 bis 50,
c = 0 bis 5,
und einem oder mehreren Vinylsiloxanen der allgemeinen Formel II 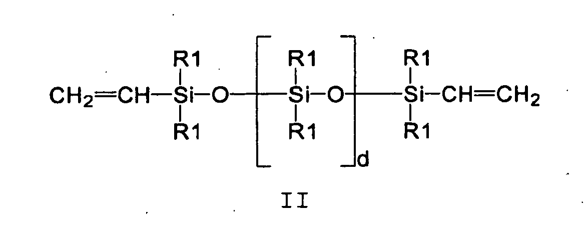 worin
d = 60 bis 500
in Gegenwart von Platin-, Rhodium- oder Rutheniumkatalysatoren, und anschließender übergangsmetallkatalysierter Addition der SiH-Gruppen an Doppelbindungen enthaltenden Polyethern der allgemeinen Formel III 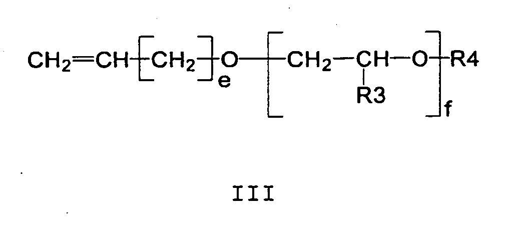 worin die Substituenten und Indices die folgende Bedeutung haben
R3 = gleiche oder verschiedene, gegebenenfalls verzweigte, gegebenenfalls Heteroatomsubstituenten tragende, gegebenenfalls Etherfunktionen enthaltende Alkyl-, Aryl- oder Alkarylreste oder Wasserstoff,
R4 = gleiche oder verschiedene, gegebenenfalls verzweigte, gegebenenfalls Heteroatomsubstituenten tragende, gegebenenfalls ungesättigte Alkyl-, Aryl- oder Alkarylreste oder Wasserstoff oder Carboxylreste,
e = 0 bis 11,
f = 3 bis 80,
mit der Maßgabe, dass sowohl eine statistische als auch eine blockweise Anordnung der Oxyalkylen-Einheiten vorliegen kann,
und gegebenenfalls mit zusätzlichen Olefinen, die gegebenenfalls funktionelle Gruppen tragen, als Weichmacher und thydro philierungsmittel für Fassern Gewebe und Non-worens aus natürlichen und synthetischen Fasern.

2. Verwendung von Organopolysiloxanen gemäß Anspruch 1 als Weichmacher für Tissuepapiere.

3. Verwendung von Organopolysiloxanen gemäß Anspruch 1 als weichmacher in Formulierungen, enthaltend eine oder mehrere Verbindungen aus der Gruppe der Aminosiloxanweichmacher, der quaternären Aminosiloxanweichmacher und der klassischen organischen Weichmacher.

## Claims

1. Use of organopolysiloxanes obtained by the reaction of one or more siloxanes of the general formula I 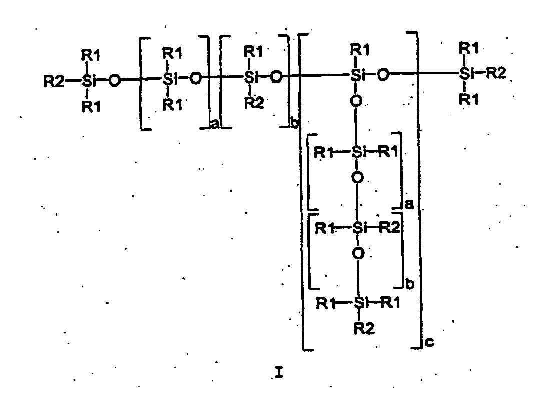 where
R1 = identical or different aliphatic aromatic hydrocarbyl radicals having 1 to 20 carbon atoms,
R2 = R1 or H with the proviso that at least three R2 radicals are H,
a = 5 to 500,
b = 1 to 50,
c = 0 to 5,
and one or more vinylsiloxanes of the general formula II 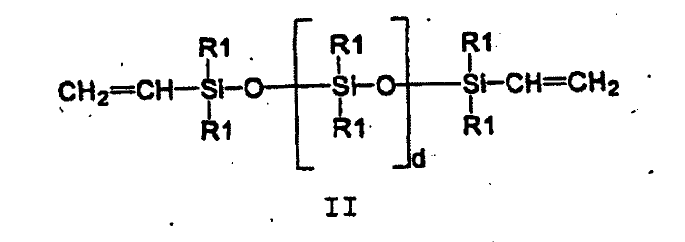 where
d = 60 to 500
in the presence of platinum, rhodium or ruthenium catalysts, and subsequent transition metal-catalyzed addition of the SiH groups onto polyethers comprising double bonds and having the general formula III 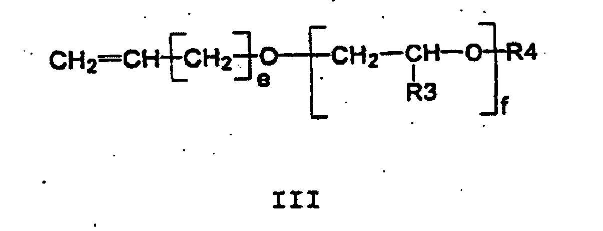 where
R3 = identical or different, optionally branched alkyl, aryl or alkaryl radicals optionally bearing heteroatom substituents and optionally containing ether functions; or hydrogen,
R4 = identical or different, optionally branched, optionally unsaturated alkyl, aryl or alkaryl radicals optionally bearing heteroatom substituents; or hydrogen or carboxyl radicals,
e = 0 to 11,
f = 3 to 80,
with the proviso that both a random and a blockwise arrangement of the oxyalkylene units can be present,
and optionally with additional olefins optionally bearing functional groups, as softeners and hydrophilicizers for fibres, wovens and nonwovens composed of natural and synthetic fibres.

2. Use of organopolysiloxanes according to Claim 1 as softeners for tissue papers.

3. Use of organopolysiloxanes according to Claim 1 as softeners in formulations containing one or more compounds from the group of the aminosiloxane softeners, the quaternary aminosiloxane softeners and the classic organic softeners.

## Revendications

1. Utilisation d'organopolysiloxanes, obtenus par transformation d'un ou de plusieurs siloxanes de formule générale I 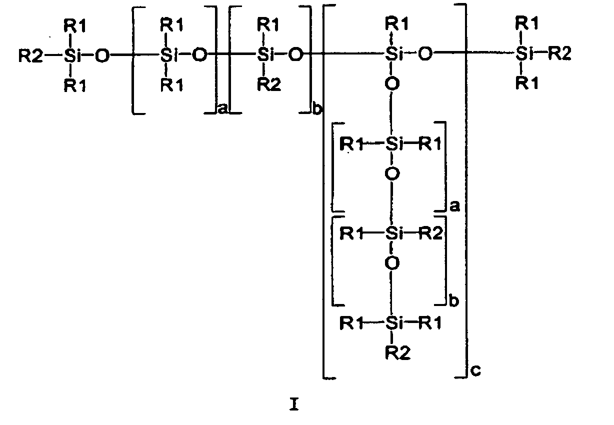 dans laquelle les substituants et indices ont la signification suivante :
R1 = des radicaux hydrocarbonés aliphatiques ou aromatiques, identiques ou différents, comprenant 1 à 20 atomes de carbone,
R2 = R1 ou H à condition qu'au moins trois radicaux R2 représentent H,
a = 5 à 500,
b = 1 à 50,
c = 0 à 5,
et d'un ou de plusieurs vinylsiloxanes de formule générale II 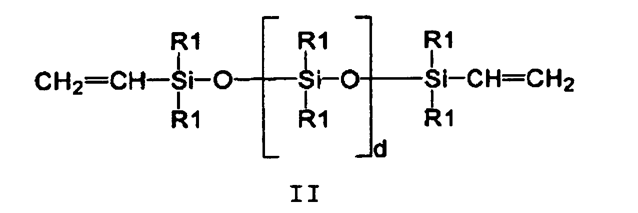 où
d = 60 à 500,
en présence de catalyseurs à base de platine, de rhodium ou de ruthénium et addition catalysée par un métal de transition consécutive des groupes SiH sur des polyéthers contenant des doubles liaisons de formule générale III 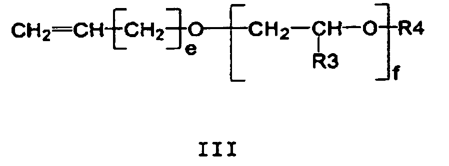 dans laquelle les substituants et indices ont la signification suivante :
R3 = des radicaux alkyle, aryle ou alkaryle identiques ou différents, le cas échéant ramifiés, portant le cas échéant des substituants hétéroatomiques, contenant le cas échéant des fonctions éther, ou de l'hydrogène,
R4 = des radicaux alkyle, aryle ou alkaryle identiques ou différents, le cas échéant ramifiés, portant le cas échéant des substituants hétéroatomiques, le cas échéant insaturés, ou de l'hydrogène ou des radicaux carboxyle,
e = 0 à 11,
f = 3 à 80,
à condition que les unités oxyalkylène puissent se trouver dans une disposition statistique ainsi que par blocs,
et le cas échéant avec des oléfines supplémentaires qui portent le cas échéant des groupes fonctionnels, comme assouplissants et agents d'hydrophilisation pour des fibres, des étoffes et des non-tissés en fibres naturelles et synthétiques.

2. Utilisation d'organopolysiloxanes selon la revendication 1 comme assouplissant pour des papiers pour mouchoirs en papier.

3. Utilisation d'organopolysiloxanes selon la revendication 1 comme assouplissants dans des formulations contenant un ou plusieurs composés du groupe des assouplissants de type aminosiloxane, des assouplissants de type aminosiloxane quaternaire et des assouplissants organiques classiques.
